# EUROPÄISCHE PATENTSCHRIFT

(11) **EP 2 388 485 B1**
(45) Veröffentlichungstag und Bekanntmachung des Hinweises auf die Patenterteilung: **17.07.2013**
(21) Anmeldenummer: 10162936.8
(22) Anmeldetag: 17.05.2010
(51) Int. Cl.: F16B 7/04, E05D 15/12, E05D 15/24

(54) **Führungsschienensegment**
Guide rail segment
Segment de rails de guidage

(43) Veröffentlichungstag der Anmeldung: 23.11.2011
(73) Patentinhaber: Assa Abloy Entrance Systems AB, 261 22 Landskrona (SE)
(72) Erfinder: Nitzl, Andreas, 85465 Langenpreising (DE)
(74) Vertreter: Aurell, Henrik

(56) Entgegenhaltungen:
- DE-U1-202007 009 133
- FR-A1- 2 929 317
- GB-A- 295 138
- US-A- 4 953 785

## Beschreibung

### Technisches Gebiet

Die vorliegende Erfindung betrifft ein Führungsschienensegment, das einen Abschnitt einer Führung für ein Sektionaltor bildet. Ein solches Führungsschienensegment kann an einem Boden einer Garage oder Lagerhalle angebracht werden.

### Stand der Technik

Seitensektionaltore werden im Stand der Technik verwendet, um Garagen oder Lagerräume zu öffnen und zu schließen, indem ein oder mehrere Torsektionen in horizontaler Richtung bewegt werden. Diese Torsektionen sind hierbei in einem oberen Bereich des Raums, beispielsweise der Garage, aufgehängt und werden mit einer am Boden fixierten oder in den Boden eingelassenen Führungsschiene geführt.

Wird eine solche Führungsschiene nachgerüstet, oder aus einem anderen Grund nicht bereits während des Baus der Garage oder des Lagerraums in den Boden eingelassen, ist es bekannt, diese Führungsschiene auf den Boden zu schrauben.

Bei Räumen, die wegen ihrer Bauform keine im 90°-Winkel zueinander befindliche Seitenwände aufweisen, wird eine Kurve bereitgestellt, die vorab für die entsprechenden Winkel geschlitzt wird. Auf der Baustelle wird die Kurve dann gebogen und montiert. Somit ist es auf der Baustelle schwer möglich den Winkel zu verändern.

Eine andere bekannte Art von Sektionaltoren sind die sogenannten Deckensektionaltore, bei denen zum Öffnen des Tores die Torsektionen in Richtung der Decke der Garage oder des Lagerraums verschoben werden. Auch für solche Tore werden Führungsschienen vorgesehen, die allerdings an den Seitenwänden der Garage angebracht werden.

Als ein druckschriftlicher Stand der Technik ist das Dokument GB 295 138 A1 bekannt, das geradlinige Führungsschienensegmente offenbart.

### Darstellung der Erfindung

Die vorliegende Erfindung wurde vor dem Hintergrund der zuvor genannten Probleme durchgeführt, und es ist Aufgabe der vorliegenden Erfindung, ein Führungsschienensegment, insbesondere für einen gekrümmten Bereich, bereitzustellen, das leicht an einen im Einzelfall gewünschten Verlauf angepasst werden kann.

Diese Aufgabe wird durch ein Führungsschienensegment gemäß Anspruch 1 gelöst. Bevorzugte Ausführungsformen sind den abhängigen Ansprüchen zu entnehmen.

Kerngedanke der Erfindung ist es hierbei, ein Führungsschienensegment bereitzustellen, das auf einfache Weise ohne weitere Hilfsmaßnahmen mit einem oder mehreren weiteren Kurvensegmenten verbunden werden kann, um den geforderten Führungsverlauf auszubilden.

Das Führungsschienensegment gemäß der Erfindung weist einen gekrümmten Profilbereich auf. Hierdurch können Schienensegmente als gekrümmte Führung vor Ort zusammengestellt werden, und der Krümmungswinkel kann an den vorgegebenen Verlauf angepasst werden, indem mehrere erfindungsgemäße Führungsschienensegmente für einen benötigten Gesamtwinkelbereich zusammengesteckt werden.

"Profilbereich" bedeutet in diesem Zusammenhang ein zum Führen eines Abschnitts eines Sektionaltors (bspw. eines Seitensektionaltors oder eines Deckensektionaltors) eingerichteter Bereich. Dieser kann ein C-förmiges oder U-förmiges Profil sein. In einer anderen Ausführungsform kann es sich um eine T-förmige Schiene handeln.

Demnach kann das Führungsschienensegment an dieser "mittleren" Halterung (also der zwischen dem Haltestück und der Halterung am Ende des Führungsschienesegments) zerteilt werden, wodurch ein neues, kleineres Führungsschienensegment bereitgestellt wird, das wie das ursprüngliche Segment beidseitig mit weiteren Führungsschienensegmenten zu einer Schiene verbunden werden kann. Es können somit auch bei der Montage neue Führungsschienensegmente ausgebildet werden. Hierdurch kann eine Schiene an die äußeren Gegebenheiten angepasst werden, ohne dass diese Daten bereits bei der Planung der Schiene berücksichtigt werden müssen. Es ist jedoch ebenfalls denkbar, die Schienen während einer Vorfertigung bereits werkseitig an die geplanten Dimensionen anzupassen. Insgesamt bietet das erfindungsgemäße Führungsschienensegment demnach höchste Flexibilität.

Ein erfindungsgemäßes Führungsschienensegment kann sich dadurch auszeichnen, dass die zumindest eine Halterung gleichmäßig von der benachbarten Halterung und/oder dem Haltestück beabstandet ist. Hierdurch ist die Bestimmung definierter Längen und Winkel recht einfach, und dies kann ohne Zusatzwerkzeug zum Erfassen der Länge oder des Winkels ausgeführt werden.

Ein Führungsschienensegment gemäß einer Ausführungsform zeichnet sich dadurch aus, dass das Haltestück und die Halterung jeweils Haltestückelemente bzw. Halterungselemente aufweisen, die beidseitig des Profilbereichs vorgesehen sind. Hierdurch wird der zum Führen der Torsektion benötigte und auch entsprechend belastete Bereich des Profils beidseitig mit dem nächstliegenden Führungsschienensegment fest verbunden. Dies erhöht die Stabilität der Gesamtführung, und verhindert, dass Führungsschienensegmente voneinander verschoben werden.

Weiter kann sich ein Führungsschienensegment gemäß der Erfindung dadurch kennzeichnen, dass der Profilbereich ein im Querschnitt C-förmiges Profil definiert, das in der im montierten Zustand vom Untergrund weg weisenden Seite des Führungsschienensegments abschnittsweise offen, also im Querschnitt C-förmig ist. In dieses C-förmige Profil kann ein Abschnitt der Torsektion gut eingreifen und entlang der Führungsbahn geführt werden.

Bei einer weiteren Ausführungsform sind die Haltestückelemente und die Halterungselemente zu einer in der Mitte des Profilbereichs vertikal verlaufenden Ebene gespiegelt aufgebaut sind. Hierdurch kann eine steife Verbindung zwischen zwei benachbarten Führungsschienensegmenten bereitgestellt werden.

Im Übrigen ist es in einer besonderen Ausführungsform vorgesehen, dass das Führungsschienensegment zumindest abschnittsweise aus einem Kunststoff ausgebildet ist. Folglich kann das Führungsschienensegment zum Beispiel mittels Spritzgießen hergestellt werden. Indem Kunststoff gewählt wird, kann das Führungsschienensegment besonders leicht in ein kleineres Führungsschienensegment unterteilt werden, beispielsweise mittels Sägens.

In einer Ausführungsform der vorliegenden Erfindung zeichnet sich das Führungsschienensegment dadurch aus, dass mit dem Haltestück und der Halterung eine formschlüssige Verbindung hergestellt werden kann, insbesondere mittels Klemmen, Clipsen oder Einrasten. Hierdurch ist es besonders einfach, mehrere Führungsschienensegmente miteinander zu einer Schiene zu verbinden. Beispielsweise wird hierzu das Haltestück in die Halterung eingeführt, und senkrecht zu dieser Bewegung eine Rastverbindung hergestellt.

Die vorliegende Erfindung betrifft darüber hinaus eine Führungsschiene, insbesondere für ein Seitensektionaltor oder ein Deckensektionaltor, die durch eine Vielzahl von Führungsschienensegmenten gemäß den obigen Ausführungen zusammengefügt ist.

### Kurze Beschreibung der Zeichnungen

- Fig. 1: zeigt eine perspektivische Ansicht eines Kurvensegments gemäß der vorliegenden Erfindung.
- Fig. 2: zeigt eine Draufsicht des Kurvensegments von Figur 1.
- Fig. 3: zeigt eine Vorderansicht des Kurvensegments von Figur 1.
- Fig. 4: zeigt eine perspektivische Ansicht zweier zusammengefügter Kurvensegmente.
- Fig. 5: ist eine Draufsicht mehrerer Führungsschienensegmente, die an einem Boden einer Garage oder eines Lagerraums zu einer Führungsschiene zusammengefügt wurden.
- Fig. 6: zeigt verschiedene weitere Ausgestaltungen von Garagen bzw. Lagerräumen mit mehreren Führungsschienensegmenten.

### Beschreibung der bevorzugten Ausführungsform

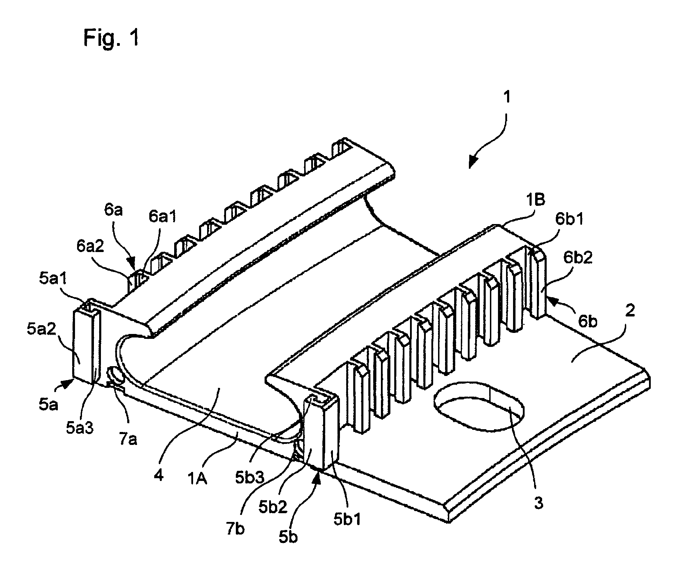

In Fig. 1 wird eine perspektivische Ansicht eines Kurvensegments 1 gemäß einer Ausführungsform der vorliegenden Erfindung gezeigt. Das Kurvensegment 1 weist eine Vorderseite 1A und eine Hinterseite 1B auf, die sich im montierten Zustand im Wesentlichen senkrecht vom Boden erstrecken und die Anschlussseiten für ein weiteres Führungsschienen- oder Kurvensegment 1 bilden. Weiter umfasst das Kurvensegment 1 einen Montagebereich 2, der mit einem Montageloch 3 versehen ist und hinsichtlich der gekrümmten Gestalt des Kurvensegments 1 eine Innenbahn beschreibt. Durch das Montageloch 3 kann beispielsweise eine Schraube eingeführt und mit dem Boden verbunden werden.

Weiter umfasst das Kurvensegment 1 ein Profil 4, das im Querschnitt im Wesentlichen C-förmig ausgebildet ist und einen im montierten Zustand vom Boden wegweisenden offenen Bereich aufweist.

An der Vorderseite 1A des Kurvensegments 1 sind beidseitig vom Profilbereich 4 zwei Haltestückeelemente 5a und 5b vorgesehen. Diese Haltestückelemente 5a, 5b schließen sich seitlich am Profil 4 an und erstrecken sich in einem ersten Abschnitt 5a1, 5b1 senkrecht zur Vorderseite 1A des Kurvensegments 1, in einem zweiten Abschnitt 5a2, 5b2 parallel zur Vorderseite 1A, und in einem dritten Abschnitt 5a3, 5b3 wiederum parallel zum ersten Abschnitt 5a1, 5b1. Zwischen dem Ende des dritten Abschnitts 5a3, 5b3 und der Vorderfläche 1A ist ein Spalt freigelassen, und die Abschnitte 5a1, 5b1; 5a2, 5b2; und 5a3, 5b3 bilden einen rechtwinkligen Hohlraum zwischen diesen Flächen aus. Im montierten Zustand des Kurvensegments erstreckt sich der Hohlraum in vertikaler Richtung.

Die Haltestückelemente 5a und 5b sind hinsichtlich einer in der Mitte des Profils 4 vertikal verlaufenden Ebene zueinander gespiegelt ausgebildet.

Weiter sind seitlich des C-förmigen Profils eine Vielzahl von Halterungselementen 6a und 6b vorgesehen. Die an einer Außenbahn des gekrümmten Kurvensegments 1 mit einer Seite des Profils 4 verbundenen Halterungselemente 6a weisen jeweils einen vom Profil 4 wegweisenden Steg 6a1 und einen parallel zur Außenseite des C-förmigen Profils 4 verlaufenden Bereich 6a2 auf. Entsprechendes gilt für die an einer hinsichtlich der Krümmung des Kurvensegments 1 nach Innen weisenden Halterungselemente 6b: Ein Steg 6b1 ist von der zum Montagebereich 2 weisenden Außenseite des Profils 4 weg gerichtet, und umfasst einen parallel zur Außenseite des Profils 4 verlaufenden Bereich an seinem Ende auf. Die Halterungselemente 6a sind zu den Halterungselementen 6b hinsichtlich einer in der Mitte des Profils 4 vertikal verlaufenden Ebene spiegelbildlich ausgebildet.

Somit weisen die Halterungselemente 6a, 6b jeweils eine Gestalt auf, die komplementär zu den Haltestückelementen 5a, 5b ist. So kann das jeweilige Haltestück 5a, 5b in die Halterungselemente 6a', 6b' eines weiteren Kurvensegments 1' eingreifen. Im Übrigen wird darauf hingewiesen, dass die in den Figuren dargestellte Außenform der Halterungselemente bzw. Haltestücke auch anders ausgebildet sein kann. Entscheidend ist lediglich, dass eine Verbindung zwischen diesen möglich ist, um zwei aufeinanderfolgende Kurvensegmente miteinander zu verbinden.

Weiter ist das erfindungsgemäße Kurvensegment 1 mit einem zwischen dem Haltestück 5a und dem Profil 4 an der Vorderseite 1A ausgebildeten Loch 7a, und einem zwischen dem Haltestück 5b und dem Profil 4 in der Vorderfläche 1A ausgebildeten Loch 7b versehen. Diese Löcher sind derart ausgebildet, dass die an der Hinterseite 1B des Kurvensegments 1 vorgesehenen Stifte 8a, 8b in diese eingreifen können.

Die Halterungselemente 6a, 6b sind jeweils gleichartig ausgebildet. Nachdem sich das Kurvensegment 1 der vorliegenden Ausführungsform über einen Winkelbereich von 10° erstreckt (fig.1), sind die Halterungselemente 6a, 6b jeweils um 1° voneinander beabstandet. So könnte das Kurvensegment 1 an den Stegen 6a1, 6b1 beispielsweise in einem Winkel von 5° zerteilt werden. Wird ein Kurvensegment 1 derart unterteilt, bleibt dennoch ein Halterungselement-Paar 6a, 6b an der neuen Hinterseite 1B bestehen.

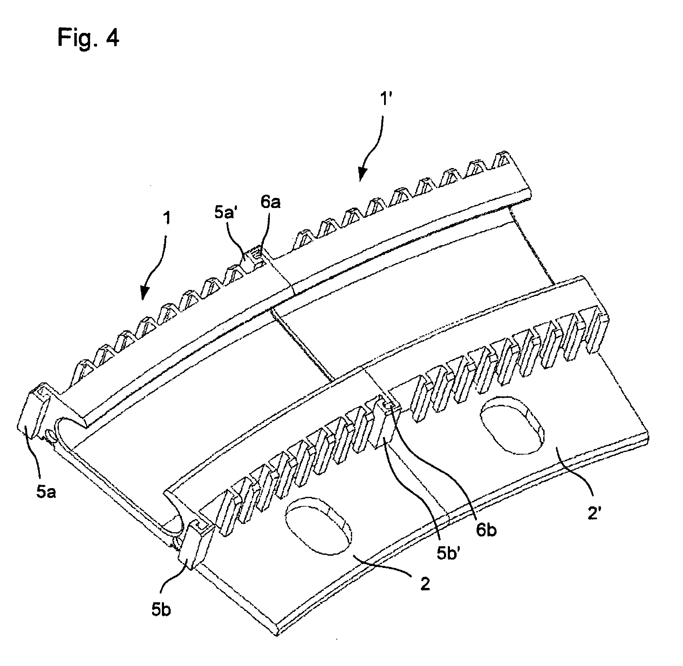

Fig. 4 zeigt in einer perspektivischen Ansicht, wie zwei Kurvensegmente 1, 1' gemäß der vorliegenden Erfindung aneinandergefügt werden. Hierbei greifen jeweils das Haltestück 5a' in ein Halterungselement 6a, und ein Haltestück 5b' in ein Halterungselement 6b ein, und fixieren somit die Kurvensegmente 1, 1' zueinander.

Wird beispielsweise das Kurvensegment 1 in ein 5°-Kurvensegment unterteilt (bspw. zersägt), so kann dieses dennoch mittels der Haltestückelemente 5a' und 5b' an einem weiteren Kurvensegment 1' angefügt werden.

Das Zerteilen eines Kurvensegments 1, 1' lässt sich leicht am Ort der Montage durchführen, da das Kurvensegment 1, 1' aus Kunststoff hergestellt ist. Beispielsweise handelt es sich um ein Spritzgussteil.

Neben einem Kurvensegment, das einen 10°-Kurvenbereich abdeckt, ist auch jeder andere Winkelbereich für ein Kurvensegment 1 denkbar. Hieraus ergibt sich auch, dass die in der vorliegenden Ausführungsform in 1°-Schritten beabstandeten Halterungselemente 6a, 6b auch in anderen Winkelschritten voneinander beabstandet sein können. Neben den beschriebenen, gleichmäßig ausgebildeten Intervallen von 1° (oder auch einer anderen Gradzahl) können die Intervalle auch ungleichmäßig vorliegen, beispielsweise aus zwei Gruppen, so dass die Stege abwechselnd um 1° und 0,5° voneinander entfernt sind. Auch können die Intervalle stetig zu- oder abnehmen.

Beispielsweise könnten 5° Kurvensegmente vorgesehen sein, um standardmäßig 85° Kurven abzubilden, oder es könnten 9° Kurvensegmente vorgesehen sein, um standardmäßig 45° Kurven abzubilden. Auch ist es möglich, dass Kurvensegmente mit unterschiedlichen Gradbereichen (ohne die beschriebene Aufteilung) angeboten und miteinander kombiniert werden können.

Neben der in der vorliegenden Ausführungsform beschriebenen Verbindungsmethode mittels Haltestückelementen 5a, 5b und Halterungselementen 6a, 6b sind im Bereich der vorliegenden Erfindung auch Klemmen, Einraster oder Clipmechanismen denkbar. Insgesamt können die Haltestückelemente bzw. Halterungselemente jegliche form- oder kraftschlüssige Verbindung mit einem weiteren Kurvensegment herstellen.

Im Übrigen betrifft die vorliegende Erfindung neben gekrümmten Kurvensegmenten selbstverständlich auch geradlinig verlaufende Führungsschienensegmente.

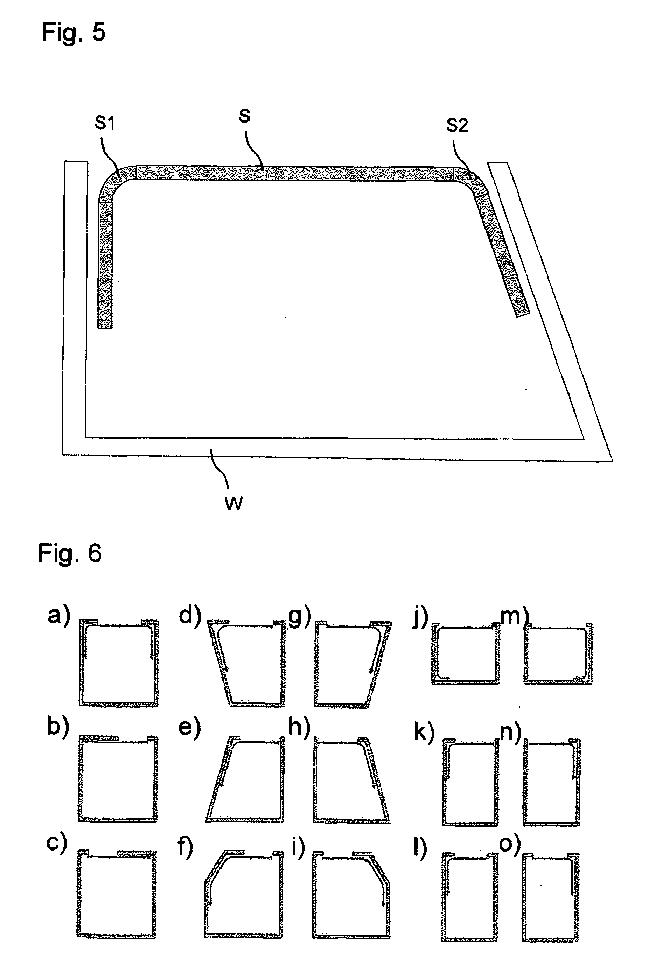

In Fig. 5 ist schematisch eine Draufsicht einer Garage oder eines Lagerraums gezeigt. Neben der sich vom Boden vertikal erstreckenden Wand W ist in einem nach Außen offenen Bereich eine Führungsschiene S verlegt, die sich auch abschnittsweise entlang der Seitenwände der Garage erstreckt. Der Bereich entlang der Seitenwände wird dann benötigt, wenn das Seitensektionaltor geöffnet wird.

An der in der Draufsicht linken Seite des offenen Bereichs sind Kurvensegmente S1 zu einer 90°-Kurve zusammengefügt, während auf der rechten Seite des offenen Bereichs eine Kurve S2 > 90° ausgebildet ist. Letztere benötigt somit weniger Kurvensegmente.

Fig. 6 zeigt verschiedene Ausgestaltungen von Garagen bzw. Lagerräumen a)-o), bei denen mehrere Führungsschienensegmente am Boden verleget wurden. Durch diese Beispiele wird anschaulich gezeigt, dass neben 90°-Kurven auch Kurvensegmente mit anderen Winkeln gängig sind (siehe insbesondere d)-i)).

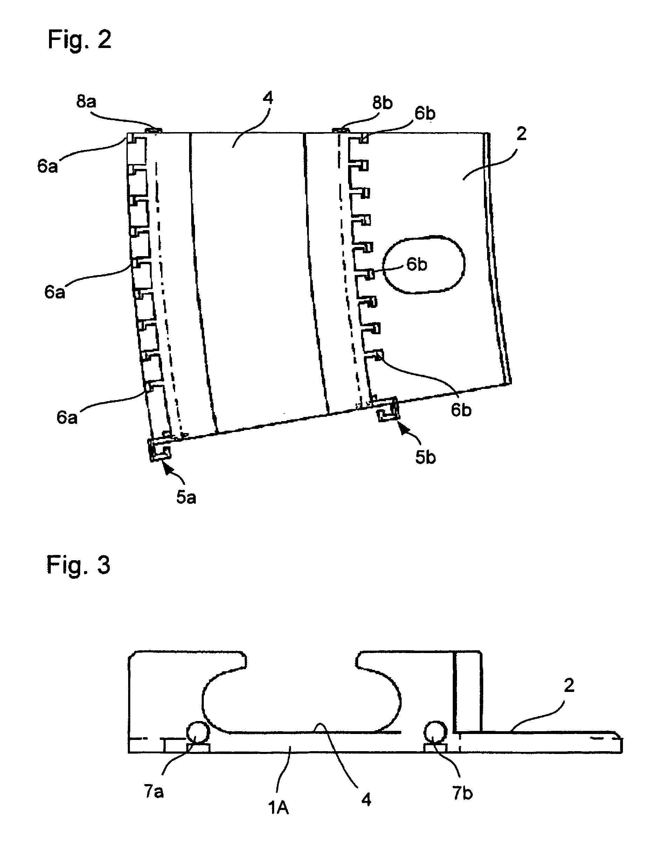

Bei einer weiteren, nicht dargestellten Ausführungsform werden die hinsichtlich der Figuren 1-6 beschriebenen Führungsschienensegmente für ein Deckensektionaltor verwendet. Dieses unterscheidet sich von einem Seitensektionaltor im Wesentlichen darin, dass die Torsektionen zum Öffnen des Tores nicht horizontal, sondern in Richtung des Dachs der Garage bewegt werden (bspw. also in vertikaler Richtung). Das bereits beschriebene Prinzip bleibt erhalten, es ist lediglich bevorzugt, dass eine Grundplatte verwendet wird, auf die einzelne Kurvensegmente aufgebracht werden. Hierdurch könnte die Vormontage der Führungsschiene "am Boden" (also in horizontaler Lage) ausgeführt werden.

Den Einsatz der Kurvensegmente für Deckensektionaltore ist insbesondere bei Dachkonstruktionen denkbar, bei denen das Dach selbst geneigt ist, also zu den Seitenwänden einen größeren oder kleinen Winkel als 90° abbildet. Somit könnte das Tor im Offenen Zustand der Garage oder des Lagerraums auch parallel zu dieser Dachneigung gelagert werden. Folglich wird der Garagen-/Lagerraum effektiv genutzt.

Bei einem Deckensektionaltor erfüllen die Führungsschienensegmente ebenso die Aufgabe, die Torsektionen beim Öffnen und Schließen des Tors zu führen. Die bereits hinsichtlich der Seitensektionaltore geschilderten Vorteile sind auch auf die Ausführungsform der Deckensektionaltore übertragbar.

## Patentansprüche

1. Führungsschienensegment (1) zum Führen eines Abschnitts einer Torsektion eines Sektionaltors, das aufweist:
einen Montagebereich (2), in dem das Führungsschienensegment (1) an einer im Wesentlichen ebenen Fläche befestigt werden kann,
einen Profilbereich (4) zum Führen eines Abschnitts einer Torsektion eines Sektionaltors,
ein Haltestück (5a, 5b) an einer Vorderseite (1A) des Führungsschienensegments (1), und eine Halterung (6a, 6b) an einer Hinterseite (1B) des Führungsschienensegments (1), wobei das Haltestück (5a, 5b) in die Halterung (6a', 6b') eines weiteren Führungsschienensegments (1') eingreifen kann, **dadurch gekennzeichnet, dass** zumindest eine weitere Halterung (6a, 6b) zwischen der Vorderseite (1A) und der Hinterseite (1B) am Führungsschienensegment (1) vorgesehen ist, und dass der Profilbereich derart gekrümmt ist, dass das Führungsschienensegment eine gekrümmte Führung ausbildet.

2. Führungsschienensegment (1) gemäß Anspruch 1, **dadurch gekennzeichnet, dass** die zumindest eine Halterung (6a, 6b) gleichmäßig von der benachbarten Halterung und/oder dem Haltestück (5a, 5b) beabstandet ist.

3. Führungsschienensegment (1) gemäß einem der vorangegangenen Ansprüche, **dadurch gekennzeichnet, dass** das Haltestück (5a, 5b) und die Halterung (6a, 6b) jeweils Haltestückelemente (5a, 5b) bzw. Halterungselemente (6a, 6b) aufweisen, die beidseitig des Profilbereichs (4) vorgesehen sind.

4. Führungsschienensegment (1) gemäß einem der vorangegangenen Ansprüche, **dadurch gekennzeichnet, dass** der Profilbereich (4) ein im Querschnitt C-förmiges Profil definiert, das in der im montierten Zustand vom Untergrund weg weisenden Seite des Führungsschienensegments (1) abschnittsweise offen ist.

5. Führungsschienensegment (1) gemäß einem der Ansprüche 3 oder 4, **dadurch gekennzeichnet, dass** die Haltestückelemente (5a, 5b) und die Halterungselemente (6a, 6b) zu einer in der Mitte des Profilbereichs (4) vertikal verlaufenden Ebene gespiegelt aufgebaut sind.

6. Führungsschienensegment (1) gemäß einem der vorangegangenen Ansprüche, **dadurch gekennzeichnet, dass** das Führungsschienensegment (1) zumindest abschnittsweise aus einem Kunststoff ausgebildet ist, vorzugsweise mittels Spritzgießen.

7. Führungsschienensegment (1) gemäß einem der vorangegangenen Ansprüche, **dadurch gekennzeichnet, dass** mit dem Haltestück (5a, 5b) und der Halterung (6a, 6b) eine formschlüssige Verbindung hergestellt werden kann, insbesondere mittels Klemmen, Clipsen oder Einrasten.

8. Führungsschiene, die durch eine Vielzahl von Führungsschienensegmenten (1) gemäß einem der vorangegangenen Ansprüche zusammengefügt ist.

## Claims

1. Guide rail segment (1) to guide a portion of a door section of a sectional door, comprising:
a mounting area (2), in which the guide rail segment (1) can be fixed on a substantially plane surface,
a profile area (4) to guide a portion of a door section of a sectional door,
a retaining piece (5a, 5b) on a front side (1A) of the guide rail segment (1) and a retaining bracket (6a, 6b) on a rear side (1 B) of the guide rail segment (1), wherein the retaining piece (5a, 5b) can engage with the retaining bracket (6a', 6b') of another guide rail segment (1'), **characterized in that** at least one further retaining bracket (6a, 6b) is provided between the front side (1A) and the rear side (1 B) on the guide rail segment (1), and **in that** the profile area is curved such that the guide rail segment forms a curved guide.

2. Guide rail segment (1) according to claim 1, **characterized in that** the at least one retaining bracket (6a, 6b) is spaced equally from the adjacent retaining bracket and/or the retaining piece (5a, 5b).

3. Guide rail segment (1) according to one of the preceding claims, **characterized in that** the retaining piece (5a, 5b) and the retaining bracket (6a, 6b) each have retaining piece members (5a, 5b) and/or retaining bracket members (6a, 6b), which are provided on both sides of the profile area (4).

4. Guide rail segment (1) according to one of the preceding claims, **characterized in that** the profile area (4) in cross section defines a C-shaped profile, which **in that** side of the guide rail segment (1) that in the mounted condition is pointing away from the ground is open in sections.

5. Guide rail segment (1) according to one of the claims 3 or 4, **characterized in that** the retaining piece members (5a, 5b) and the retaining bracket members (6a, 6b) are built up mirrored to a plane, which is vertically stretching in the middle of the profile area (4).

6. Guide rail segment (1) according to one of the preceding claims, **characterized in that** the guide rail segment (1) at least in sections is formed of plastic, preferably by injection moulding.

7. Guide rail segment (1) according to one of the preceding claims, **characterized in that** a form-fitting connection can be established with the retaining piece (5a, 5b) and the retaining bracket (6a, 6b), particularly by clamping, clipping or latching.

8. Guide rail that is joined together by a number of guide rail segments (1) according to one of the preceding claims.

## Revendications

1. Segment de rail de guidage (1) pour guider une portion d'une section de porte d'une porte sectionnelle, comprenant :
une région de montage (2) dans laquelle le segment de rail de guidage (1) peut être fixé à une surface essentiellement plane,
une région de profil (4) pour guider une portion d'une section de porte d'une porte sectionnelle,
une pièce de rétention (5a, 5b) à une face avant (1A) du segment de rail de guidage (1), et une console de rétention (6a, 6b) à une face arrière (1B) du segment de rail de guidage (1), la pièce de rétention (5a, 5b) pouvant s'engager dans la console de rétention (6a', 6b') d'un autre segment de rail de guidage (1'), **caractérisé en ce qu'**au moins une autre console de rétention (6a, 6b) est pourvue entre la face avant (1A) et la face arrière (1 B) au segment de rail de guidage (1), et **en ce que** la région de profil est courbée si bien que le segment de rail de guidage forme un guidage courbé.

2. Segment de rail de guidage (1) selon la revendication 1, **caractérisé en ce que** l'au moins une console de rétention (6a, 6b) est espacée régulièrement de la console de rétention et/ou de la pièce de rétention (5a, 5b) avoisinante(s).

3. Segment de rail de guidage (1) selon l'une des revendications précédentes, **caractérisé en ce que** la pièce de rétention (5a, 5b) et la console de rétention (6a, 6b) chacune présentent des éléments de pièce de rétention (5a, 5b) et/ou des éléments de console de rétention (6a, 6b) qui sont arrangés aux deux côtés de la région de profil (4).

4. Segment de rail de guidage (1) selon l'une des revendications précédentes, **caractérisé en ce que** la région de profil (4) définit un profil d'une forme de C en section transversale qui, dans la face du segment de rail de guide (1) étant, à l'état monté, détournée du sol, est ouvert en sections.

5. Segment de rail de guide (1) selon l'une des revendications 3 ou 4, **caractérisé en ce que** les éléments de pièce de rétention (5a, 5b) et les éléments de console de rétention (6a, 6b) sont construits les uns de manière inversés aux autres par rapport à un plan s'étendant verticalement dans le centre de la région de profil (4).

6. Segment de rail de guidage (1) selon l'une des revendications précédentes, **caractérisé en ce que** le segment de rail de guidage (1) est formé au moins en sections d'une matière synthétique, de préférence par moulage par injection.

7. Segment de rail de guidage (1) selon l'une des revendications précédentes, **caractérisé en ce qu'**un raccord ajusté en forme peut être établi avec la pièce de rétention (5a, 5b) et la console de rétention (6a, 6b), en particulier par des pinces, des attaches ou des engrènements.

8. Rail de guidage qui est joint par une pluralité de segments de rail de guidage (1) selon l'une des revendications précédentes.
